# EUROPÄISCHE PATENTSCHRIFT

(11) **EP 2 263 918 B1**
(45) Veröffentlichungstag und Bekanntmachung des Hinweises auf die Patenterteilung: **08.05.2013**
(21) Anmeldenummer: 10003506.2
(22) Anmeldetag: 31.03.2010
(51) Int. Cl.: B60R 11/00, B60R 11/02, F41H 7/04, B60P 7/18

(54) **Schockabsorbierende Halterung, insbesondere Regalsystem**
Shock absorbing holder, in particular shelf system
Fixation absorbant les chocs, notamment système d'étagère

(30) Priorität: 18.06.2009 DE 102009025333
(43) Veröffentlichungstag der Anmeldung: 22.12.2010
(73) Patentinhaber: Rheinmetall Landsysteme GmbH, 24107 Kiel (DE)
(72) Erfinder: Östreicher, Martin, 34346 Hann. Münden (DE); Kröger, Hartwig, 24161 Altenholz (DE)
(74) Vertreter: Dietrich, Barbara

(56) Entgegenhaltungen:
- FR-A1- 2 898 658
- GB-A- 1 391 591
- US-A1- 2005 001 137
- US-A1- 2005 236 447
- US-A1- 2006 138 187
- US-A1- 2007 120 038
- US-A1- 2007 194 589

## Beschreibung

Die Erfindung beschäftigt sich mit dem Problem einer sicheren Positionierung bzw. Befestigung von Einbauten bei großer Vertikal- und / oder Querdynamik, hervorgerufen insbesondere durch Ansprengungen von Minen sowie möglichen Unfällen. Vorgeschlagen wird eine Halterung, die hauptsächlich aus einer Gurtkonstruktion besteht und so konzipiert ist, dass diese Gurte eine Trägerplatte für diverse Einbauten aufnehmen kann.

Aus der US 2005/0249568 A1 ist ein Container-Sicherungssystem, d.h. eine sichere Befestigung eines Containers auf einem Fahrzeug. Diese umfasst einen umfangseitigen Gurt sowie zwei diesen Gurt überlappende Gurte mit Sicherungsmittel zur Verbindung mit weiteren Gurten, die an der Fahrzeugoberfläche angebunden sind

Bekannt sind fahrzeugintegrierte Halterungen für Einbauten, wie beispielsweise Regalen oder Regalsystemen, aus metallischen Werkstoffen wie Aluminium, Aluminiumstecksysteme sowie geschweißte Stahlkonstruktionen.

Nachteilig bei diesen Systemen sind ein hohes Eigengewicht als auch eine unzulängliche Festigkeit bei Ansprengungen, die zu Verletzungen von Personen führen kann, wenn diese sich nicht nur verbiegen, sondern splittern, brechen oder dergleichen. Bei Unfällen kann die noch verbliebene Festigkeit ebenfalls zu Verletzungen führen.

Eine tragbare Halterung für Laptops oder Notebooks beschreibt die US 2005/0236447 A1. Diese Halterung ist in einem Fahrzeugsitz, einem Flugzeugsitz und der dergleichen anbringbar. Die Halterung weist zwei Laschen und einen Boden auf, die aus derben und permanent weichen und flexiblen Material bestehen. Mit diesen Laschen wird die Halterung dann am vorderen Sitz angehängt. Die Umrandung besteht aus einem Schlauchgewebe, in dem ein Boden eingenäht ist. Dabei kann es sich um eine Schaumeinlage handeln.

Aus der nicht vor veröffentlichten DE 10 2008 063 804 A1 ist ein minensicheres Sitzwerk bekannt, bestehend aus einem Tragwerk, das mittels Gurte zwischen dem Fahrzeugdach und dem Fahrzeugboden eingebunden ist.

Die DE 10 2007 048 486 B3 zeigt eine Sitzanordnung auf, wobei der Sitz Bestandteil einer Plattform ist, die entlang von Seilen verlagerbar sowie in der jeweiligen Position an den Seilen lagefixierbar ist.

Aus der DE 10 2004 027 768 B4 ist eine Sitzeinrichtung bekannt, die über Gurte gehalten wird. Zwischen den Gurten ist die Sitzfläche integriert.

Weitere Schock absorbierende Lagerungen werden mit der WO 03/004958 A2 als auch der WO 2006/108613 A1 publiziert.

Die Erfindung stellt sich die Aufgabe, eine sichere Positionierung und Befestigung von Einbauten bei großer Vertikal- und / oder Querdynamik zu gewährleisten, wobei Gurte in weitester Form die sonst verwendeten Metallstrukturen der Halterungen bilden.

Gelöst wird die Aufgabe durch die Merkmale des Patentanspruchs 1. Vorteilhafte Ausführungen sind in den Unteransprüchen aufgelistet.

Der Erfindung geht der Idee nach, um eine sichere Positionierung bzw. Befestigung von Einbauten bei großer Vertikal- und / oder Querdynamik, hervorgerufen insbesondere durch Ansprengungen von Minen sowie möglichen Unfällen zu realisieren, eine Halterung vorzusehen, die (hauptsächlich) nur aus Haupttraggurten und Quertraggurten besteht, die ihrerseits miteinander über einfache Verknüpfungen, Knoten etc. verbindbar sind. Auf den Quertraggurten liegt dann je Etage eine Trägerplatte auf, die ihrerseits diverse Eigenkomponenten aufnehmen kann. Die Träger- bzw. Adapterplatte besitzt vordere und hintere Halterungen, durch die eine Auflage bzw. Verbindung mit dem einzelnen Quergurt geschaffen wird.

Es werden somit nur Gurte in die Konstruktion eingebunden, wobei in die Gurte in festen Bereichen Verbindungsstellen vorgesehen sind, sodass z. B. Schubladen realisierbar sind. Die Gurte bilden in weitester Form die sonst verwendeten Metallstrukturen der Halterungen, im vorliegenden Beispiel eines Regalsystems. Die Gesamtfunktion kann durch sinnvolle Ergänzungen mit zusätzlichen Metallstrukturen optimiert werden.

Durch die flächendeckend eingeführte und bekannte Laserbrennschneidtechnologie bietet sich eine Verbindung der Gurte mit der Trägerplatte über Schlitze in Blechen der Trägerplatte an.

Die Wahl des Gurtmaterials als auch deren Auslegung und Spannung kann individuell und austauschbar gestaltet werden. Sie sind unter dem Gesichtspunkt hochdynamischer Lasten auslegbar und mittels Berechnungen ermittelbar.

Bei in idealer Weise gleich bleibender Positionierung von Einbauten wird zudem eine Gewichtsreduzierung erreicht. Ein weiterer Vorteil neben einer leichten Austauschbarkeit des Systems ist, dass die Gurtregale im Aufbau einfach sind und den Fahrzeugaufbauten / Fahrzeuginnenleben einfacher angepasst werden können. Das Regelsystem kann je nach Anforderung an die Stabilität und die Funktionalität ausgelegt werden. Selbst nach einer Ansprengung oder einem Crash ist das System weiterhin funktionsfähig.

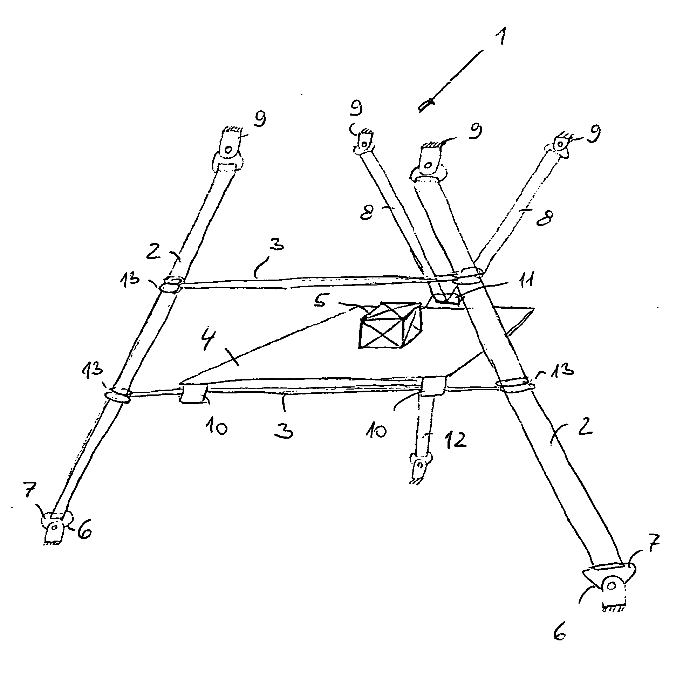

Anhand eines einfachen Ausführungsbeispiels mit Zeichnung soll die Erfindung näher erläutert werden. Es zeigt die einzige Figur ein Gurtregal 1 mit vorderen 2 (und nicht näher dargestellten) hinteren Haupttragegurten, vorderen 3 (ebenfalls nicht näher dargestellten hinteren) Quergurten und einer, in einen der Quergurtpaare 3 eingebundenen Trägerplatte 4 zur Aufnahme einer Einzelkomponente 5. Mit 6 ist ein Fahrzeuganbindungspunkt für die Haupttragegurte 2 gekennzeichnet, hier mit jeweils einer Spannvorrichtung 7.

Die Haupttragegurte 2 und die Quertragegurte 3 sind in vorgegebenen Bereichen 13 miteinander verbunden, beispielsweise durch Verknüpfung oder Schlaufenbildung etc.

Die Platten 4 besitzen ihrerseits Halterungen 10 an ihrer vorderen Seite, in denen die Quergurte 3 durchgeführt werden, wobei die Platte 4 auf den Quergurt 3 locker aufliegen sollte. Alternativ können die Quergurte 3 mit den Halterungen 10 fest verbunden werden. Dazu können die Halterungen 10 mit Schlitzen versehen sein, durch die die Quergurte 3 gezogen werden.

In einer bevorzugten und in der Figur aufgezeigten Ausführung ist an die Trägerplatte 4 mittig eine hintere Halterung 11 mit einem Schlitz für das Durchführen eines (Einzel-)Gurtes 8 vorgesehen, dessen Enden an obere 9 oder aber auch an seitlichen Befestigungspunkten der Fahrzeugkarosserie (nicht näher dargestellt) geführt und dort befestigt werden. Zur Stabilisierung sind dann seitlich zur Fahrzeugwand oder nach unten zum Fahrzeugboden geführten (Stabilisierungs-)Gurte 12 notwendig. Die Verbindung mit einer Seitenwand des Fahrzeuges könnte dann vorteilhaft sein, wenn mehrere Träger- oder Adapterplatten 4 höhenmäßig versetzt in das Gurtregal 1 eingebunden werden sollen.

Die aus Erfahrungen optimale und frei wählbare Positionierung der einzelnen Gurte 2, 3 mit deren Vorspannungen 7 (einstellbar) an der Fahrzeugstruktur sorgt für ein ruhiges Verhalten im Fahrbetrieb sowie für ein Energie verzerrendes Verhalten bei Schockeinleitung, die hierbei durch plastisches Längen / Strecken (Recken) der Gurte 2, 3 aufgenommen wird.

## Patentansprüche

1. Regalsystem (1) mit einer Schockabsorbierenden Halterung und einer Träger-bzw. Adapterplatte (4), bestehend aus Gurten (2, 3) zur Bildung der Halterung (1) als auch zum Befestigen der Halterung (1) an eine Fahrzeugkarosserie, wobei die Halterung (1) Haupttragegurte (2) und Quergurte (3) aufweist, die Haupttragegurte (2) zum Befestigen der Halterung (1) am und/oder im Fahrzeug und die Quergurte (3) zur Aufnahme jeweils einer Träger- bzw. einer Adapterplatte (4) dienen, **dadurch gekennzeichnet, dass** die Träger- bzw. Adapterplatte (4) vordere und hintere Halterungen (10,11) besitzt, durch eine deren (10) eine Auflage bzw. Verbindung mit dem einzelnen Quergurt (3) geschaffen wird.

2. Halterung nach Anspruch 1, **dadurch gekennzeichnet, dass** vorderen (2) und hintere Haupttragegurte vorgesehen sind, zwischen denen vorderen (3) und hintere Quergurte eingebunden sind.

3. Halterung nach Anspruch 1, **dadurch gekennzeichnet, dass** vordere Haupttragegurte (2) und vordere Quergurte (3) vorgesehen sind, wobei hintere, an die Träger- bzw. Adapterplatte (4) angreifende Gurte (8) an obere oder an seitliche Befestigungspunkte (9) befestigbar sind.

4. Halterung nach einem der Ansprüche 1 bis 3, **dadurch gekennzeichnet, dass** die Träger-bzw. Adapterplatte (4) mitzuführende Einzelkomponenten (5) aufnimmt.

5. Halterung nach einem der Ansprüche 1 bis 4, **dadurch gekennzeichnet, dass** für die Haupttragegurte (2) Fahrzeuganbindungspunkte (6) mit jeweils einer Spannvorrichtung (7) vorhanden sind.

6. Halterung nach einem der Ansprüche 1 bis 5, **dadurch gekennzeichnet, dass** die Platten (4) ihrerseits vorzugsweise Halterungen (10) an ihrer vorderen Seite besitzen, in denen die Quergurte (3) vorzugsweise durchgeführt werden, wobei die Platte (4) auf dem Quergurt (3) locker aufliegen sollte.

7. Halterung nach einem der Ansprüche 1 bis 6, **dadurch gekennzeichnet, dass** die Quergurte (3) mit den Halterungen (10) fest verbunden werden.

8. Hafterung nach Anspruch 7, **dadurch gekennzeichnet, dass** die Halterungen (10) mit Schlitzen versehen sind, durch die die Quergurte (3) gezogen werden.

9. Halterung nach einem der Ansprüche 1 bis 8, **dadurch gekennzeichnet, dass** an die Trägerplatte (4) mittig eine hintere Halterung (11) mit einem Schlitz für das Durchführen eines Gurtes (8) vorgesehen, dessen Enden an obere Berfestigungspunkte (9) oder aber auch an seitlichen Befestigungspunkten der Fahrzeugkarosserie geführt und dort befestigt werden.

10. Haherung nach einem der Ansprüche 1 bis 9, **dadurch gekennzeichnet, dass** zur Stabilisierung seitlich zur Fahrzeugwand oder nach unten zum Fahrzeugboden geführten Gurte (12) notwendig sind.

11. Halterung nach einem der Ansprüche 5 bis 10, **dadurch gekennzeichnet dass** einzeine Gurte (2, 3) optimal und frei wählbar positioniert und deren Vorspannungen (7) eingestellt werden können, was für ein ruhiges Verhalten im Fahrbetrieb sowie für ein Energie verzerrendes Verhalten bei Schockeinleitung sorgt, die hierbei durch plastisches Längen Strecken der Gurte (2, 3) aufgenommen wird.

12. Halterung nach einem der Ansprüche 1 bis 11, **dadurch gekennzeichnet, dass** die Gesamtfunktion zum Teil durch Ergänzungen mit Metallstrukturen optimiert wird.

## Claims

1. Shelf system (1) with a shock-absorbing holder and a carrier or adapter plate (4), consisting of straps (2, 3) for forming the holder (1) and also for fastening the holder (1) to a vehicle body, wherein the holder (1) has main carrying straps (2) and transverse straps (3), and the main carrying straps (2) serve for fastening the holder (1) to and/or in the vehicle and the transverse straps (3) serve for in each case holding a carrier or an adapter plate (4), **characterized in that** the carrier or adapter plate (4) has front and rear holders (10, 11) by means of one of which (10) a support or connection to the individual transverse strap (3) is provided.

2. Holder according to Claim 1, **characterized in that** front main carrying straps (2) and rear main carrying straps are provided, between which front transverse straps (3) and rear transverse straps are connected.

3. Holder according to Claim 1, **characterized in that** front main carrying straps (2) and front transverse straps (3) are provided, wherein rear straps (8) acting on the carrier or adapter plate (4) are fastenable at upper or at lateral fastening points (9).

4. Holder according to one of Claims 1 to 3, **characterized in that** the carrier or adapter plate (4) receives individual components (5) to be carried along.

5. Holder according to one of Claims 1 to 4, **characterized in that** vehicle connection points (6) each having a tensioning device (7) are present for the main carrying straps (2).

6. Holder according to one of Claims 1 to 5, **characterized in that** the plates (4) for their part preferably have, on the front side thereof, holders (10) in which the transverse straps (3) are preferably passed through, wherein the plate (4) is intended to rest loosely on the transverse strap (3).

7. Holder according to one of Claims 1 to 6, **characterized in that** the transverse straps (3) are fixedly connected to the holders (10).

8. Holder according to Claim 7, **characterized in that** the holders (10) are provided with slots through which the transverse straps (3) are pulled.

9. Holder according to one of Claims 1 to 8, **characterized in that** a rear holder (11) with a slot for passing a strap (8) through is provided centrally on the carrier plate (4), the ends of the strap being guided to upper fastening points (9) or else also to lateral fastening points of the vehicle body and being fastened there.

10. Holder according to one of Claims 1 to 9, **characterized in that** straps (12) guided laterally with respect to the vehicle wall or downwards with respect to the vehicle floor are necessary for stabilisation.

11. Holder according to one of Claims 5 to 10, **characterized in that** individual straps (2, 3) can be positioned optimally and in a freely selectable manner and the initial tension (7) thereof can be set, this ensuring steady behaviour in the driving mode and energy-consuming behaviour in the event of the introduction of a shock which, in this case, is absorbed by plastic lengthening/stretching of the straps (2, 3).

12. Holder according to one of Claims 1 to 11, **characterized in that** the overall function is partly optimized by additions of metal structures.

## Revendications

1. Système d'étagère (1) comprenant une fixation absorbant les chocs et une plaque de support ou plaque adaptatrice (4), constitué de sangles (2, 3) pour former la fixation (1) et pour fixer la fixation (1) à une carrosserie de véhicule, la fixation (1) présentant des sangles de support principales (2) et des sangles transversales (3), les sangles de support principales (2) pour fixer la fixation (1) sur et/ou dans le véhicule et les sangles transversales (3) pour recevoir dans chaque cas une plaque de support ou plaque adaptatrice (4), **caractérisé en ce que** la plaque de support ou plaque adaptatrice possède des fixations avant et arrière (10, 11), par l'une desquelles (10) est créé un appui ou une liaison avec la sangle transversale unique (3).

2. Fixation selon la revendication 1, **caractérisée en ce que** des sangles de support principales avant (2) et arrière sont prévues, entre lesquelles sont incorporées des sangles transversales avant (3) et arrière.

3. Fixation selon la revendication 1, **caractérisée en ce que** des sangles de support principales avant (2) et des sangles transversales avant (3) sont prévues, des sangles arrière (8) venant en prise sur la plaque de support ou plaque adaptatrice (4) pouvant être fixées en des points de fixation supérieurs ou latéraux (9).

4. Fixation selon l'une quelconque des revendications 1 à 3, **caractérisée en ce que** la plaque de support ou plaque adaptatrice (4) reçoit des composants individuels (5) à emporter.

5. Fixation selon l'une quelconque des revendications 1 à 4, **caractérisée en ce que** pour les sangles de support principales (2), des points de liaison au véhicule (6) sont prévus avec à chaque fois un dispositif de serrage (7).

6. Fixation selon l'une quelconque des revendications 1 à 5, **caractérisée en ce que** les plaques (4) possèdent pour leur part de préférence des fixations (10) sur leur côté avant, dans lesquelles les sangles transversales (3) sont de préférence guidées, la plaque (4) devant reposer lâchement sur la sangle transversale (3).

7. Fixation selon l'une quelconque des revendications 1 à 6, **caractérisée en ce que** les sangles transversales (3) sont connectées fixement aux fixations (10).

8. Fixation selon la revendication 7, **caractérisée en ce que** les fixations (10) sont pourvues de fentes à travers lesquelles sont passées les sangles transversales (3).

9. Fixation selon l'une quelconque des revendications 1 à 8, **caractérisée en ce qu'**une fixation arrière (11) est prévue centralement sur la plaque de support (4), avec une fente pour le passage d'une sangle (8) dont les extrémités sont guidées au niveau de points de fixation supérieurs (9) ou aussi au niveau de points de fixation latéraux de la carrosserie du véhicule et y sont fixées.

10. Fixation selon l'une quelconque des revendications 1 à 9, **caractérisée en ce que** des sangles (12) guidées latéralement par rapport à la paroi du véhicule, ou vers le bas par rapport au plancher du véhicule sont nécessaires pour la stabilisation.

11. Fixation selon l'une quelconque des revendications 5 à 10, **caractérisée en ce que** des sangles individuelles (2, 3) sont positionnées de manière optimale et librement sélectionnable et leurs précontraintes (7) peuvent être ajustées, ce qui assure un comportement silencieux pendant la conduite ainsi qu'un comportement diffusant l'énergie en cas de choc, laquelle est reçu par rapport allongement/étirement plastique des sangles (2, 3).

12. Fixation selon l'une quelconque des revendications 1 à 11, **caractérisée en ce que** la fonction globale est en partie optimisée par des compléments avec des structures métalliques.
